# FASCICULE DE BREVET EUROPEEN

(11) **EP 3 863 992 B1**
(45) Date de publication et mention de la délivrance du brevet: **24.08.2022**
(21) Numéro de dépôt: 19801963.0
(22) Date de dépôt: 04.10.2019
(51) Int. Cl.: C04B 35/80, C04B 41/00, C04B 35/117, C04B 35/14, C04B 35/18, C04B 35/447, C04B 35/488, C04B 35/565, C04B 35/584, C04B 35/58, C04B 35/185

(54) **PROCÉDÉ DE FABRICATION D'UNE PIÈCE EN MATÉRIAU COMPOSITE AVEC CONTRÔLE DE CONFORMITÉ**
VERFAHREN ZUR HERSTELLUNG EINES TEILS AUS VERBUNDSTOFF MIT NACHGIEBIGKEITSKONTROLLE
METHOD FOR MANUFACTURING A PART MADE OF COMPOSITE MATERIAL WITH COMPLIANCE CONTROL

(30) Priorité: 12.10.2018 FR 1859488
(43) Date de publication de la demande: 18.08.2021
(73) Titulaire: SAFRAN AIRCRAFT ENGINES, 75015 Paris (FR); SAFRAN, 75015 Paris (FR)
(72) Inventeur: LIAIS, Ludovic, Philippe, 77550 MOISSY-CRAMAYEL (FR); DROZ, Nicolas, 77550 MOISSY-CRAMAYEL (FR); PODGORSKI, Michaël, 77550 MOISSY-CRAMAYEL (FR)
(74) Mandataire: Cabinet Beau de Loménie
(86) Numéro de dépôt international: PCT/FR2019/052364
(87) Numéro de publication internationale: WO 2020/074813

(56) Documents cités:
- WO-A1-2017/060601
- US-A1- 2004 105 969

## Description

### Arrière-plan de l'invention

La présente invention concerne un procédé de fabrication d'une pièce en matériau composite notamment de type oxyde/oxyde ou à matrice céramique (CMC), c'est-à-dire comportant un renfort fibreux formé à partir de fibres en matériau céramique réfractaire et d'une matrice également en matériau céramique réfractaire.

La réalisation de textures fibreuses obtenues par tissage tridimensionnel entre des fils continus de chaîne et de trame permet d'augmenter la résistance mécanique du matériau et en particulier sa résistance au délaminage. Dans ce cas et également pour des textures fibreuses 2D de forte épaisseur, seuls les procédés utilisant un gradient de pression, comme les procédés de moulage par injection dits « RTM », permettent de faire pénétrer une barbotine chargée dans la texture fibreuse dont l'épaisseur peut atteindre plusieurs dizaines de millimètres selon les applications visées.

Le document WO 2017/060601 décrit l'injection d'une barbotine chargée dans une texture fibreuse. La texture fibreuse est maintenue dans un moule poreux qui permet de retenir dans la texture les particules présentes dans la barbotine injectée tout en évacuant la phase liquide de la barbotine à l'extérieur de la texture. Le document US 2017/369382 décrit un autre procédé d'injection d'une barbotine chargée dans une texture fibreuse. Dans ce document, la texture fibreuse est maintenue dans une cavité de moulage d'un outillage d'injection comprenant une pièce en matériau poreux en contact avec une partie de la texture fibreuse. La barbotine chargée injectée dans la texture fibreuse est drainée par la pièce en matériau poreux de manière à retenir les particules dans la texture tout en éliminant de celle-ci la phase liquide.

Cependant, lors de la mise en oeuvre de ces procédés, des incidents peuvent survenir lors de la phase d'injection (apparition de bouchons ou fuites dans le système d'alimentation de barbotine) ou lors de la phase de démoulage (déformation, arrachements locaux, etc.). Ces incidents peuvent conduire à une préforme démoulée hors tolérance et/ou à l'apparition de « zones sèches » dans la préforme, c'est-à-dire des zones dépourvues de particules et, par conséquent, la présence de zones dépourvues de matrice dans la pièce finale.

### Objet et résumé de l'invention

La présente invention a pour but de remédier aux inconvénients précités et de proposer une solution qui permet de réaliser des pièces en matériau composite notamment de type oxyde/oxyde ou CMC par injection d'une barbotine chargée dans une texture fibreuse, et ce en assurant à la fois le respect des tolérances (géométriques et dimensionnelles) et l'optimisation du dépôt et de la répartition des particules solides dans la texture fibreuse afin d'obtenir un matériau sans zones sèches.

A cet effet, l'invention propose un procédé de fabrication d'une préforme fibreuse d'une pièce en matériau composite, la préforme étant obtenue par:
- formation d'une texture fibreuse à partir de fibres céramiques réfractaires,
- mise en forme de la texture fibreuse dans une cavité de moulage présente dans un outillage d'injection,
- injection d'une barbotine contenant une poudre de particules céramiques réfractaires dans la texture fibreuse présente dans la cavité de moulage,
- drainage du liquide de la barbotine ayant traversé la texture fibreuse et rétention de la poudre de particules céramiques réfractaires à l'intérieur de ladite texture de manière à obtenir une préforme fibreuse chargée de particules céramiques réfractaires,
- premier démoulage de la préforme fibreuse,
- frittage des particules céramiques réfractaires présentes dans la préforme fibreuse afin de former une matrice réfractaire densifiée dans ladite préforme,
   caractérisé en ce que le procédé comprend, après le premier démoulage de la préforme fibreuse, les étapes suivantes :
   - immersion de la préforme fibreuse démoulée dans un bain d'un liquide apte à décompacter les particules céramiques réfractaires présentes dans la préforme fibreuse,
   - mise en forme de la préforme fibreuse humide dans une cavité de moulage présente dans un outillage d'injection,
   - élimination du liquide présent dans la préforme fibreuse,
   - injection supplémentaire d'une barbotine contenant une poudre de particules céramiques réfractaires dans la préforme fibreuse présente dans la cavité de moulage,
   - drainage du liquide de la barbotine ayant traversé la texture fibreuse et rétention de la poudre de particules céramiques réfractaires à l'intérieur de ladite préforme de manière à obtenir une préforme fibreuse chargée de particules céramiques réfractaires,
   - deuxième démoulage de la préforme fibreuse.

Ainsi, avec le procédé de l'invention, il est possible de reprendre une préforme qui, après démoulage, présente des cotes hors tolérance et/ou des zones ou porosités dépourvues de particules céramiques (zones sèches). On diminue ainsi grandement le taux de rebus des pièces finales.

Selon une caractéristique particulière du procédé de l'invention, Celui-ci comprend, après l'étape de premier démoulage, une étape de contrôle de la conformité de la préforme fibreuse démoulée comprenant au moins un contrôle de tolérance géométrique, un contrôle de tolérance dimensionnelle ou un contrôle de la qualité de l'injection, la préforme démoulée étant non conforme lorsqu'elle présente une géométrie ou des dimensions hors tolérance ou une ou plusieurs zones dépourvues de particules céramiques.

Selon une autre caractéristique particulière du procédé de l'invention, l'immersion de la préforme fibreuse démoulée est réalisée dans un bain d'eau maintenu à une température comprise entre 20°C et 80°C.

Selon une autre caractéristique particulière du procédé de l'invention, l'immersion de la préforme fibreuse démoulée dans le bain d'eau est réalisée pendant une durée comprise entre 30 minutes et 4 heures.

Selon une autre caractéristique particulière du procédé de l'invention, l'élimination de l'eau dans la préforme fibreuse est réalisée par chauffage de ladite préforme à une température inférieure à 100°C. Le chauffage de la préforme peut être réalisé dans une chambre à vide avec une pression inférieure à 100 mbar.

Selon une autre caractéristique particulière du procédé de l'invention, l'injection supplémentaire de barbotine est réalisée à une pression supérieure ou égale à 6 bars.

Lors de l'étape de la formation de la texture fibreuse, les fils peuvent être tissés suivant un tissage tridimensionnel ou multicouche. La texture fibreuse peut être également réalisée par empilement de strates tissées suivant un tissage bidimensionnel.

Les fils de la préforme peuvent être des fils formés de fibres constituées d'un ou plusieurs des matériaux suivants : l'alumine, la mullite, la silice, un aluminosilicate, un borosilicate, du carbure de silicium et du carbone.

Les particules céramiques réfractaires peuvent être en un matériau choisi parmi : l'alumine, la mullite, la silice, un aluminosilicate, un aluminophosphate, la zircone, un carbure, un borure et un nitrure.

Selon une autre caractéristique particulière du procédé de l'invention, celui-ci comprend en outre une étape de séchage de la préforme fibreuse réalisée après chaque étape de drainage du liquide de la barbotine ayant traversé la texture fibreuse.

Dans un exemple de réalisation, la pièce en matériau composite obtenue peut constituer une aube de turbomachine.

L'invention concerne également un procédé de fabrication d'une pièce en matériau composite comprenant la fabrication d'une préforme fibreuse conformément au procédé selon l'invention et comprenant en outre, après le deuxième démoulage de la préforme, une étape de frittage des particules céramiques réfractaires présentes dans la préforme fibreuse afin de former une matrice réfractaire densifiée dans ladite préforme.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue schématique en perspective éclatée d'un outillage d'injection conformément à un mode de réalisation de l'invention,
- la figure 2 est une vue schématique en coupe montrant l'outillage de la figure 1 fermé avec une texture fibreuse positionnée dans celui-ci,
- la figure 3 est une vue schématique en coupe montrant les étapes d'imprégnation d'une texture fibreuse avec une barbotine chargée dans l'outillage de la figure 2,
- la figure 4 est un ordinogramme montrant les étapes d'un procédé conforme à l'invention,
- les figures 5 et 6 sont des vues schématiques montrant un autre exemple d'outillage d'injection pouvant être utilisé pour le procédé de l'invention.

### Description détaillée de modes de réalisation

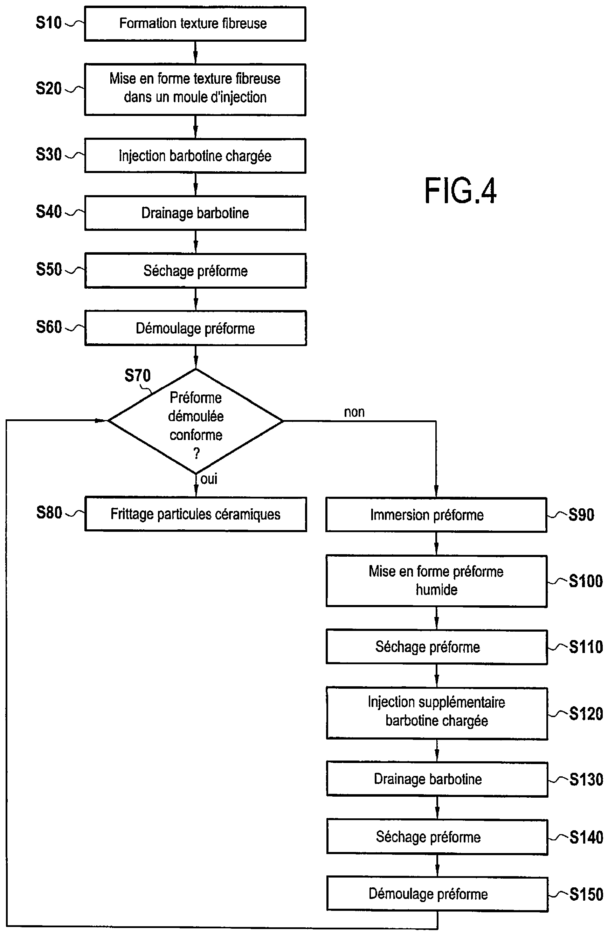

Comme indiqué sur la figure 4, le procédé de fabrication d'une préforme fibreuse pour la fabrication d'une pièce en matériau composite notamment de type oxyde/oxyde ou CMC conforme à la présente invention débute par la réalisation d'une texture fibreuse destinée à former le renfort de la pièce (étape S10).

La structure fibreuse est réalisée de façon connue par tissage au moyen d'un métier à tisser de type jacquard sur lequel on a disposé un faisceau de fils de chaîne ou torons en une pluralité de couches, les fils de chaîne étant liés par des fils de trame ou inversement. La texture fibreuse peut être réalisée par empilement de strates ou plis obtenus par tissage bidimensionnel (2D). La texture fibreuse peut également être réalisée directement en une seule pièce par tissage tridimensionnel (3D). Par « tissage bidimensionnel », on entend ici un mode de tissage classique par lequel chaque fil de trame passe d'un côté à l'autre de fils d'une seule couche de chaîne ou inversement. Le procédé de l'invention est particulièrement adapté pour permettre l'introduction d'une barbotine chargée dans des textures fibreuses 2D, à savoir des textures obtenues par empilement de strates ou plis 2D, d'épaisseur importante, c'est-à-dire des structures fibreuses 2D ayant une épaisseur d'au moins 0,5 mm, de préférence au moins 1 mm.

Par « tissage tridimensionnel » ou « tissage 3D » ou encore « tissage multicouche », on entend ici un mode de tissage par lequel certains au moins des fils de trame lient des fils de chaîne sur plusieurs couches de fils de chaîne ou inversement suivant un tissage correspondant à une armure de tissage qui peut être notamment choisie parmi une des armures suivantes : interlock, multi-toile, multi-satin et multi-sergé.

Par « armure ou tissu interlock », on entend ici une armure de tissage 3D dont chaque couche de fils de chaîne lie plusieurs couches de fils de trame avec tous les fils de la même colonne de chaîne ayant le même mouvement dans le plan de l'armure.

Par « armure ou tissu multi-toile », on désigne ici un tissage 3D avec plusieurs couches de fils de trame dont l'armure de base de chaque couche est équivalente à une armure de type toile classique mais avec certains points de l'armure qui lient les couches de fils de trame entre elles.

Par « armure ou tissu multi-satin », on désigne ici un tissage 3D avec plusieurs couches de fils de trame dont l'armure de base de chaque couche est équivalente à une armure de type satin classique mais avec certains points de l'armure qui lient les couches de fils de trame entre elles.

Par « armure ou tissu multi-sergé », on désigne ici un tissage 3D avec plusieurs couches de fils de trame dont l'armure de base de chaque couche est équivalente à une armure de type sergé classique mais avec certains points de l'armure qui lient les couches de fils de trame entre elles.

Les textures 3D présentent une géométrie complexe dans laquelle il est difficile d'introduire et de répartir de manière homogène des particules solides en suspension. Le procédé de l'invention est également très bien adapté pour l'introduction d'une barbotine chargée dans des textures fibreuses tissées 3D.

Les fils utilisés pour tisser la texture fibreuse destinée à former le renfort fibreux de la pièce en matériau composite peuvent être notamment formés de fibres constituées d'un des matériaux suivants: l'alumine, la mullite, la silice, un aluminosilicate, un borosilicate, du carbure de silicium, du carbone ou d'un mélange de plusieurs de ces matériaux.

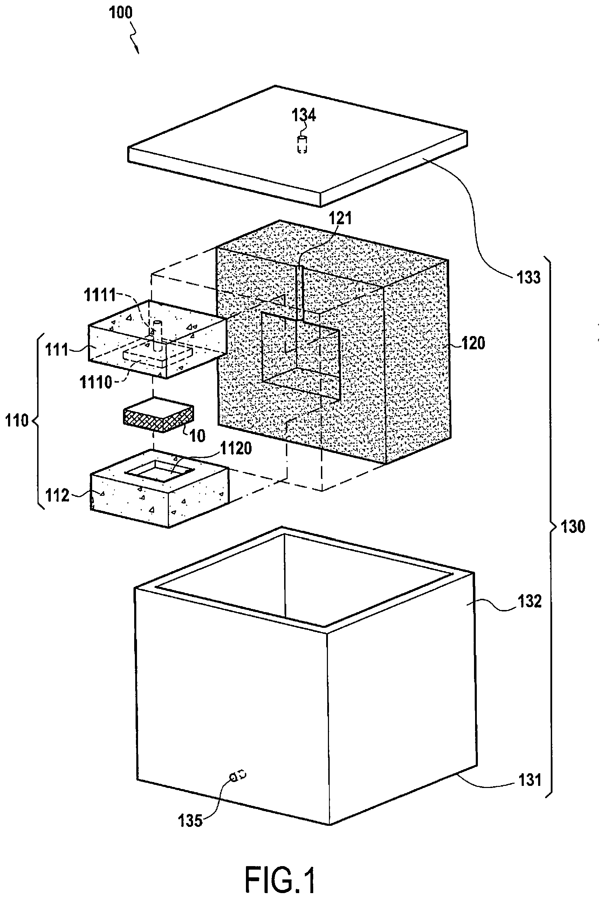

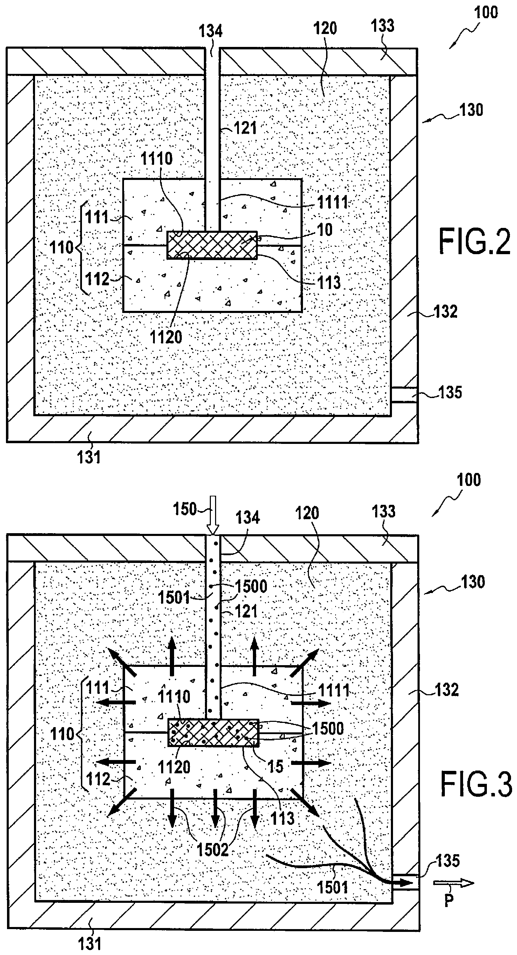

Une fois la texture fibreuse réalisée, celle-ci est placée dans un outillage d'injection qui permet, comme expliqué ci-après, de mettre en forme la texture fibreuse et de déposer des particules réfractaires au sein de la texture fibreuse. A cet effet et comme illustrée sur les figures 1 et 2, une texture fibreuse 10 est placée dans un outillage d'injection 100. Dans l'exemple décrit ici, la texture fibreuse 10 est réalisée suivant une des techniques définies ci-avant (empilement strates 2D ou tissage 3D) avec des fils d'alumine Nextel 610^{™}. La texture fibreuse 10 est ici destinée à former le renfort fibreux d'une aube en matériau composite oxyde/oxyde.

L'outillage 100 comprend un moule en matériau poreux 110 formé en deux parties 111 et 112 comportant chacune respectivement une empreinte 1110 et une empreinte 1120. Les empreintes 1110 et 1120 délimitent une cavité de moulage 113 (figure 2) lorsque les deux parties 111 et 112 sont assemblées l'une contre l'autre, cavité dans laquelle la texture fibreuse est destinée à être placée. Les empreintes 1110 et 1120 présentent une forme correspondant à la forme de la pièce à fabriquer à partir de la texture fibreuse. Les deux parties 111 et 112 servent à dimensionner la préforme et donc la pièce à obtenir ainsi qu'à ajuster le taux de fibres dans la pièce à obtenir.

Dans l'exemple décrit ici, la partie 111 du moule en matériau poreux 110 comporte un canal 1111 pour l'injection d'une barbotine chargée dans la texture fibreuse comme expliqué ci-après en détails.

L'outillage d'injection 100 comprend également une enceinte en matériau rigide 130 dans laquelle le moule en matériau poreux 110 est maintenu. L'enceinte 130 comprend un fond 131, une paroi latérale 132 solidaire du fond 131 et un couvercle 133. L'enceinte 130 peut être réalisée avec tout type de matériau présentant une rigidité suffisante pour résister aux pressions d'injection de la barbotine et au pompage (tirage du vide) pour l'évacuation de la phase liquide de celle-ci. L'enceinte peut être notamment réalisée en matériau métallique ou plastique.

Le couvercle 133 comporte un port d'injection 134 au travers duquel la barbotine est destinée à être injectée afin de pénétrer dans la porosité de la texture fibreuse 10. Dans l'exemple illustré aux figures 1 et 2, la barbotine est destinée à être injectée au travers d'un port d'injection 134 débouchant dans la cavité de moulage 113. L'enceinte 130 comporte un évent d'évacuation 135 du milieu liquide de la barbotine, présent ici sur la paroi latéral 132 au voisinage du fond 131.

Dans le mode de réalisation décrit ici, le moule en matériau poreux 110 présente une taille inférieure au volume interne de l'enceinte en matériau métallique 130. Dans ce cas, le volume présent entre le moule en matériau poreux et l'enceinte en matériau métallique est comblé par un milieu poreux 120 afin de permettre la circulation et l'évacuation de la phase liquide de la barbotine. Le milieu poreux 120 peut être constitué notamment par du sable, une mousse, ou un matériau granulaire. Le milieu poreux 120 comporte un conduit 121 en communication à la fois avec le port d'injection 134 de l'enceinte 130 et le canal 1111 du moule en matériau poreux 110 afin de permettre l'injection de la barbotine dans la texture fibreuse 10.

Le moule en matériau poreux 110 peut être par exemple réalisé à partir d'une résine poreuse. A titre d'exemples non limitatifs, les résines poreuses suivantes peuvent être utilisées pour la réalisation du moule en matériau poreux :
- Gil-Resin^{®} T avec des pores ayant une taille comprise entre 8 et 13 µm,
- Gil-Resin^{®} F+ avec des pores ayant une taille comprise entre 4 et 7 µm,
- SamaPore avec des pores ayant une taille comprise entre 3 et 10 µm,
- Microplast Fine avec des pores ayant une taille moyenne de 7 µm.

Le moule en matériau poreux 110 permet le drainage du milieu liquide de la barbotine à l'extérieur de la texture fibreuse 10 et son évacuation par l'évent 135 du fait de l'application d'un gradient de pression entre l'évent 135 et le port d'injection 134.

A titre d'exemple, la taille moyenne des pores (D50) du moule en matériau poreux peut par exemple être comprise entre 1 µm et 10 µm.

La texture 10 est mise en forme par placement de celle-ci dans le moule 110 est fermeture de l'outillage 100 (étape S20 et figure 2).

On procède ensuite à l'injection d'une barbotine chargée de particules céramiques réfractaires (étape S30 et figure 3). La figure 3 illustre la configuration obtenue durant l'injection d'une barbotine 150 et le drainage du milieu ou phase liquide de celle-ci. Avant l'injection de la barbotine dans l'outillage, un tirage au vide a été réalisé au sein du moule en matériau poreux afin de remplir ensuite au maximum la texture fibreuse avec la barbotine. Le tirage au vide peut être réalisé par pompage au niveau de l'évent d'évacuation 135.

Sur la figure 3, la barbotine 150 a été injectée sous pression par le port d'injection 134 et transportée jusqu'à la texture fibreuse 10 par le conduit 121 et le canal 1111 de manière à pénétrer dans la texture fibreuse 10. Les particules réfractaires 1500 présentes dans la barbotine 150 sont destinées à permettre la formation d'une matrice céramique réfractaire dans la porosité de la texture fibreuse 10. Cette matrice céramique réfractaire peut, dans un exemple de réalisation, être une matrice d'oxyde réfractaire.

La barbotine peut par exemple être une suspension d'une poudre d'alumine dans de l'eau. La poudre d'alumine utilisée peut être une poudre d'alumine alpha commercialisée par la société Baikowski sous la dénomination SM8.

Plus généralement, la barbotine peut être une suspension comportant des particules céramiques réfractaires présentant une dimension particulaire moyenne comprise entre 0,1 µm et 10 µm. La teneur volumique en particules céramiques réfractaires dans la barbotine peut, avant l'injection, être comprise entre 10% et 50%. Les particules céramiques réfractaires peuvent comporter un matériau choisi parmi : l'alumine, la mullite, la silice, les aluminosilicates, les aluminophosphates, les carbures, les borures, les nitrures et les mélanges de tels matériaux. En fonction de leur composition de base, les particules céramiques réfractaires peuvent, en outre, être mélangées avec des particules d'alumine, de zircone, d'aluminosilicate, d'un oxyde de terre rare, de silicate de terre rare (lequel peut par exemple être utilisé dans les barrières environnementales ou thermiques) ou toute autre charge permettant de fonctionnaliser la pièce en matériau composite à obtenir comme le noir de carbone, le graphite ou le carbure de silicium.

Le milieu ou phase liquide de la barbotine peut, par exemple, comporter une phase aqueuse présentant un pH acide (i.e. un pH inférieur à 7) et/ou une phase alcoolique comportant par exemple de l'éthanol. La barbotine peut comporter un acidifiant tel que de l'acide nitrique et le pH du milieu liquide peut par exemple être compris entre 1,5 et 5. La barbotine peut, en outre, comporter un liant organique comme de l'alcool polyvinylique (PVA) lequel est notamment soluble dans l'eau.

Comme illustré sur la figure 3, les particules céramiques réfractaires 1500 sont présentes après injection de la barbotine 150 dans la porosité de la texture fibreuse 10. Les flèches 1502 représentent le mouvement du milieu ou phase liquide 1501 de la barbotine drainé par le moule en matériau poreux 110.

Un pompage P peut, en outre, être réalisé au niveau de l'évent de sortie 135 durant le drainage, par exemple au moyen d'une pompe à vide primaire. La réalisation d'un tel pompage permet d'améliorer le drainage et de sécher plus rapidement la texture fibreuse.

Dans cette configuration, le moule en matériau poreux 110 permet de retenir dans la texture fibreuse 10 les particules céramiques réfractaires 1500 initialement présentes dans la barbotine et que tout ou partie de ces particules se déposent par filtration dans la texture fibreuse 10.

Pendant et/ou après l'injection de la barbotine chargée, on procède au drainage de la phase liquide de celle-ci (étape S40 et figure 3). Plus précisément, grâce à l'utilisation du moule en matériau poreux 110, le milieu ou phase liquide 1501 de la barbotine peut être drainé hors de la texture fibreuse 10 dans toutes les directions, le milieu ou phase liquide 1501 circulant ensuite dans le milieu poreux 120 jusqu'à l'évent 135 par lequel il est évacué hors de l'outillage d'injection 100. Ce drainage du milieu liquide dans toutes les directions permet de favoriser un dépôt par sédimentation homogène et dense des particules céramiques réfractaires 1500 dans la texture fibreuse 10 et d'obtenir, par conséquent, un taux volumique de matrice élevé dans la pièce finale.

En outre, le moule en matériau poreux 110 étant maintenu dans une enceinte en matériau rigide 130, celui-ci peut résister aux pressions d'injection de la barbotine chargée dans la texture ainsi qu'à celles exercées par le pompage pour l'évacuation du milieu liquide de la barbotine.

Une fois les étapes d'injection et de drainage effectuées, on obtient une préforme fibreuse 15 chargée de particules céramiques réfractaires, par exemple de particules d'oxyde céramique réfractaire ou d'alumine.

La préforme obtenue est ensuite démoulée une première fois (étape S60), la préforme devant conserver après démoulage la forme et les dimensions adoptées dans la cavité de moulage. Avant démoulage, la préforme peut être éventuellement séchée si nécessaire (étape S50).

Conformément à l'invention, le procédé comprend en outre une étape de contrôle de la conformité de la préforme démoulée (étape S70).

Le contrôle de la conformité de la préforme comprend tout ou partie des contrôles suivants : contrôle de tolérance géométrique, contrôle de tolérance dimensionnelle et contrôle d'injection.

Le contrôle de tolérance géométrique consiste à vérifier de façon connue si la préforme démoulée est ou non hors de tolérances ou spécifications géométriques définies préalablement. Le contrôle consiste en une inspection de la géométrie de la préforme soit de manière globale, soit de manière locale (i.e. une portion de la préforme). A titre d'exemples non limitatifs, les tolérances géométriques examinées peuvent correspondre à des écarts admissibles de formes, d'orientation ou de position. Il peut s'agir, par exemple pour les tolérances de forme, de tolérance de rectitude, de planéité, de circularité, de cylindricité, etc. Pour les tolérances d'orientation, il peut s'agir par exemple de tolérance de perpendicularité, de parallélisme, d'inclinaison, etc. Pour les tolérances de position, il peut s'agir par exemple de tolérance de symétrie, de coaxialité, etc. Le contrôle de tolérance géométrique peut être réalisé par des moyens de mesure connus tels que notamment marbre, cales/comparateur, piges, jauges, microtomographie, par rayons X et palpeurs ou des machines à mesurer tridimensionnelle (MMT).

Le contrôle de tolérance dimensionnelle consiste à vérifier de façon connue si la préforme démoulée est ou non hors de tolérances ou spécifications dimensionnelles définies préalablement. Le contrôle consiste en une inspection des dimensions de la préforme. Le contrôle de tolérance dimensionnelle peut être réalisé par des moyens de mesure connus tels que pied à coulisse, tomographie et palpeurs ou machine à mesurer tridimensionnelle (MMT).

Le contrôle de la qualité de l'injection consiste à vérifier si, après l'injection de la préforme avec la barbotine chargée, celle-ci présente des zones dépourvues de particules céramiques réfractaires appelées « zones sèches ». Comme décrit précédemment, l'injection d'une barbotine chargée et son drainage a pour but de remplir le réseau de porosités présent dans la texture fibreuse avec des particules céramiques réfractaires. Afin d'assurer une densification optimale de la pièce finale, l'ensemble du réseau de porosités doit être comblé avec les particules. La présence de zones sèches dans la préforme après injection et drainage conduit à des zones d'absence de matrice dans la pièce finale qui sont susceptibles d'altérer ses propriétés mécaniques. Le contrôle de la présence de zones sèches dans la préforme démoulée peut être réalisé notamment par tomographie ou par mesure de la masse volumique de la préforme, la masse volumique mesurée étant comparée à une masse volumique cible estimée ou calculée correspondant à un remplissage optimal du réseau de porosité de la préforme par les particules.

Si après contrôle, la préforme fibreuse démoulée est considérée conforme, c'est-à-dire qu'elle ne présente pas de géométrie ou de dimensions hors tolérance ni qu'elle présente une ou plusieurs zones sèches, la préforme est ensuite soumise à un traitement thermique de frittage (étape S80), par exemple sous air à une température comprise entre 1000°C et 1200°C afin de fritter les particules céramiques réfractaires et ainsi former une matrice céramique réfractaire dans la porosité de la préforme fibreuse. On obtient alors une pièce en matériau composite, par exemple une pièce en matériau composite Oxyde/Oxyde, munie d'un renfort fibreux formé par la préforme fibreuse et présentant un taux volumique de matrice élevé avec une répartition homogène de la matrice céramique réfractaire dans tout le renfort fibreux.

En revanche, si la préforme fibreuse démoulée est considérée non conforme, c'est-à-dire qu'elle présente une géométrie et/ou des dimensions hors tolérance et/ou une ou plusieurs zones sèches, la préforme est soumise à un cycle de retouche ou reprise conformément à l'invention. Plus précisément, lorsque la préforme contrôlée est jugée non conforme, celle-ci est tout d'abord immergée dans un bain d'un liquide apte à décompacter les particules ou grains présents dans la préforme fibreuse (étape S90). L'immersion de la préforme dans le bain a pour effet de redonner à celle-ci une flexibilité ou déformabilité qui va permettre une nouvelle mise en forme de la texture fibreuse. En effet, la barbotine chargée est injectée dans la texture sous pression si bien que les particules ou grains de céramique présents dans la préforme sont à l'état compacté, ce qui confère une rigidité à la préforme après son démoulage. L'immersion de la préforme dans un bain d'un liquide adapté permet de décompacter les particules entre elles et de redonner une certaine souplesse à la préforme. Le liquide du bain est préférentiellement de l'eau mais peut être également un alcool ou tout autre liquide apte à décompacter les particules ou grains accumulés dans la préforme et qui n'est pas de nature à polluer la préforme. L'eau et l'alcool permettent de diluer les éventuels liants présents dans la phase liquide de la barbotine qui peuvent rigidifier la préforme. Enfin, l'immersion de la préforme dans un bain de liquide adapté permet de redistribuer les particules de céramiques dans le réseau de porosités de la préforme et de rouvrir des passages pour une injection supplémentaire d'une barbotine chargée.

La température du bain d'eau est de préférence supérieure à 20°C et inférieure à 80°C afin d'éviter l'apparition de bulles d'eau qui peuvent générer des défauts dans la pièce finale. La température du bain peut être par exemple de 40°C.

Le temps d'immersion de la préforme dans le bain d'eau est de préférence compris entre 30 minutes et 4 heures. Cette durée peut être par exemple de 2 heures.

On procède ensuite à une nouvelle mise en forme de la préforme humide (étape S100). Cette mise en forme peut être réalisée dans le même moule que celui utilisé pour la mise en forme initiale, à savoir dans l'exemple décrit ici avec le moule 110 utilisé lors de l'étape S20, ou dans un moule différent. La mise en forme de la préforme encore humide est réalisée à température ambiante (20°C ± 5°C).

Une fois la mise en forme réalisée, le moule renfermant la préforme maintenue en forme est placée dans une étuve afin d'évaporer le liquide contenu dans la préforme (étape S110). Lorsque ce liquide est de l'eau, a température d'étuvage ou de séchage est maintenue inférieure à 100°C afin d'éviter l'ébullition de l'eau. Cette température est toutefois de préférence supérieure à 80°C afin de faciliter l'évaporation de l'eau présente dans la préforme confinée dans le moule. La durée de cette étape de séchage de la préforme dépend de la température appliquée et de la taille de la préforme. Cette durée peut être comprise entre 4 heures et 24 heures. Le chauffage de la préforme peut être réalisé dans une chambre à vide avec une pression inférieure à 100 mbar.

La préforme séchée est ensuite soumise à une étape d'injection supplémentaire avec une barbotine chargée de particules céramiques réfractaires (étape S120). Cette injection supplémentaire est possible car la préforme est encore dans un état semi-fini ou état cru, les particules céramiques n'étant pas consolidées entre elles. Il existe donc encore un réseau de porosités (interstices entres les particules et interstices entre les particules et les fibres) qui permet de faire circuler la barbotine dans la préforme. Les paramètres d'injection de la barbotine chargée sont les mêmes que ceux définis lors de la première injection lors de l'étape S30, en particulier en ce qui concerne la nature de la barbotine utilisée (mêmes particules céramiques et même phase liquide).

La quantité de barbotine injectée peut être ajustée en fonction du volume libre restant estimé dans la préforme. Dans le cas de la présence d'une ou plusieurs zones sèches, la mesure de la masse volumique de la préforme réalisée lors du contrôle de conformité à l'étape S70 peut être utilisée pour déterminer la quantité de particules céramiques réfractaires à réinjecter.

Dans le cas où la préforme démoulée présente une géométrie et/ou des dimensions hors tolérance, la durée d'injection et de filtration/drainage de la barbotine peut être réduite car la préforme est déjà bien imprégnée et ne nécessite qu'une nouvelle conformation. Dans ce cas, cette durée peut être simplement comprise entre 2 heures et 8 heures.

L'injection supplémentaire de barbotine est réalisée de préférence à une pression supérieure ou égale à 6 bars afin d'optimiser le remplissage de la préforme avec les particules de céramiques et de compacter cette dernière.

Pendant et/ou après l'injection supplémentaire de la barbotine chargée, on procède au drainage de la phase liquide de celle-ci dans les mêmes conditions que celles déjà décrites pour l'étape S40 (étape S130).

La préforme obtenue est ensuite démoulée une deuxième fois (étape S150) en ayant éventuellement été séchée avant démoulage (étape S140).

Une nouvelle étape de contrôle de la conformité de la préforme est alors réalisée (étape S70). En fonction du résultat de ce contrôle, on procède au frittage des particules céramiques réfractaires ou de nouveau aux étapes de correction de la préforme (étapes S90 à S150).

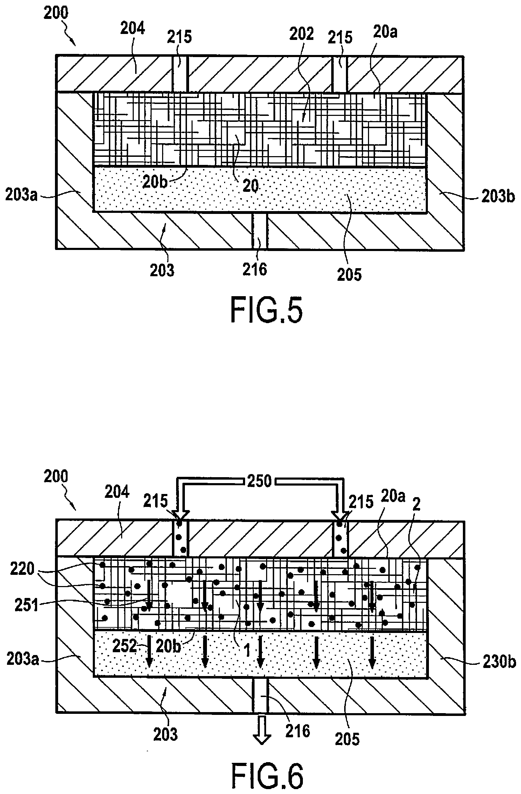

Les étapes de mise en forme (étapes S20 et S100), d'injection/réinjection de barbotine chargée (étapes S30 et S120) et de drainage/filtration (étapes S40 et S130) peuvent être réalisées avec un outillage différent de l'outillage d'injection 100 décrit précédemment en relation avec les figure 1 à 3. Ces étapes peuvent être également réalisées avec un outillage d'injection 200 représenté sur la figure 5. Plus précisément, l'outillage 200 comprend une cavité de moulage 202 délimitée par un moule 203 et un contre-moule 204 et dans laquelle est placée une texture fibreuse 20 fabriquée comme décrit précédemment. Le moule 203 constitue un support rigide sur lequel la texture fibreuse 20 est présente durant les étapes d'injection/réinjection (étapes S30 et S120) et de drainage/filtration (étapes S30 et S130). Le moule 203 comporte des parois latérales 203a et 203b délimitant la cavité de moulage 202. Dans l'exemple illustré, l'outillage 200 est fermé dans sa partie inférieure par le moule 203 et est fermé dans sa partie supérieure par le contre-moule 204 formant un couvercle refermant l'outillage 200. Le moule 203 et le contre-moule 204 servent à dimensionner la préforme et donc la pièce à obtenir ainsi qu'à ajuster le taux volumique de fibres dans la pièce à obtenir.

Le contre-moule 204 comporte une pluralité de ports d'injection 215 de la barbotine au travers desquels la barbotine est destinée à être injectée afin de pénétrer dans la porosité de la texture fibreuse 20 au travers de la première face 20a de la texture fibreuse. Le moule 3 comporte, quant à lui, un évent de sortie 216 du milieu liquide de la barbotine.

Dans l'exemple illustré, une pièce en matériau poreux 205 est présente dans la cavité de moulage 202 entre le moule 203 et la texture fibreuse 20. La pièce en matériau poreux 205 est présente entre l'évent de sortie 216 et la texture fibreuse 20. La pièce en matériau poreux 205 est présente au contact du moule 203 et au contact de la deuxième face 20b de la texture fibreuse 20 au travers de laquelle le drainage du milieu liquide de la barbotine est destiné à être réalisé. La pièce en matériau poreux 205 peut par exemple être réalisée en polytétrafluoroéthylène (PTFE) microporeux comme les produits « microporous PTFE » vendus par la société Porex^{®}. On peut par exemple utiliser pour réaliser la pièce en matériau poreux 205, le matériau PM 0130 commercialisé par la société Porex^{®} présentant une taille de pores comprise entre 1 µm et 2 µm. La pièce en matériau poreux 205 permet le drainage du milieu liquide de la barbotine à l'extérieur de la texture fibreuse 20 et son évacuation par l'évent de sortie 216 du fait de l'application d'un gradient de pression entre l'évent de sortie 216 et les ports d'injection 215.

La pièce en matériau poreux 205 présente une épaisseur supérieure ou égale à 0,1 mm. A titre d'exemple, la pièce en matériau poreux 205 peut présenter une épaisseur supérieure ou égale à 1 mm, voire de plusieurs millimètres. Le taux moyen de porosité de la pièce en matériau poreux peut être d'environ 30%. La taille moyenne des pores (D50) de la pièce en matériau poreux peut par exemple être comprise entre 1 µm et 2 µm.

On a illustré à la figure 6 la configuration obtenue durant l'injection de la barbotine et le drainage du milieu liquide. La barbotine a été injectée par les ports d'injection 215 de manière à pénétrer dans la texture fibreuse 20 au travers de la première face 20a de la texture fibreuse. Les particules céramiques réfractaires 220 présentes dans la barbotine sont destinées à permettre la formation d'une matrice céramique réfractaire dans la porosité de la texture fibreuse 20. Les exemples de barbotines décrits précédemment peuvent être également utilisés ici.

Comme illustré à la figure 6, les particules céramiques réfractaires 220 sont présentes après injection de la barbotine dans la porosité de la texture fibreuse 20. Les flèches 251 représentent le mouvement de la barbotine injectée dans la texture fibreuse 20 tandis que les flèches 252 représentent quant à elles le mouvement du milieu liquide de la barbotine drainé par la pièce en matériau poreux 205.

Dans cette configuration, la pièce en matériau poreux 205 permet de retenir dans la texture fibreuse 20 les particules céramiques réfractaires 220 initialement présentes dans la barbotine et que tout ou partie de ces particules 220 se déposent par filtration dans la texture fibreuse. Avec la configuration de l'outillage 200 utilisant une pièce en matériau poreux pour le drainage, une étape de séchage de la préforme fibreuse est réalisée après chaque étape de drainage du liquide de la barbotine ayant traversé la texture fibreuse.

Une fois les étapes d'injection/réinjection et de drainage/filtration effectuées, on obtient une préforme fibreuse chargée de particules céramiques réfractaires, par exemple de particules d'oxyde céramique réfractaire, par exemple d'alumine.

La préforme obtenue est ensuite séchée puis démoulée. Conformément à l'invention, on procède alors au contrôle de la conformité de la préforme démoulée (étape S70). En fonction du résultat du contrôle, on procède au frittage des particules céramiques (étape S80) ou aux étapes de correction de la préforme (étapes S90 à S150) comme déjà décrites précédemment.

On obtient alors une pièce en matériau composite, par exemple une pièce en matériau composite Oxyde/Oxyde, munie d'un renfort fibreux formé par la préforme fibreuse, la pièce présentant une géométrie et des dimensions conformes aux spécifications définies ainsi qu'un taux volumique de matrice élevé avec une répartition homogène de la matrice céramique réfractaire dans tout le renfort fibreux (absence de zones sèches).

Une pièce en matériau composite CMC autre que Oxyde/Oxyde peut être obtenue de la même façon en réalisant la texture fibreuse avec des fibres de carbure de silicium et/ou de carbone et en utilisant une barbotine chargée de particules de carbure (par exemple de SiC), de borure (par exemple de TiB₂) ou de nitrure (par exemple de Si₃N₄).

## Revendications

1. Procédé de fabrication d'une préforme fibreuse d'une pièce en matériau composite, la préforme étant obtenue par :
- formation d'une texture fibreuse (10) à partir de fibres céramiques réfractaires,
- mise en forme de la texture fibreuse (10) dans une cavité de moulage (113) présente dans un outillage d'injection (110),
- injection d'une barbotine (150) contenant une poudre de particules céramiques réfractaires (1500) dans la texture fibreuse (10) présente dans la cavité de moulage,
- drainage du liquide (1501) de la barbotine (150) ayant traversé la texture fibreuse (10) et rétention de la poudre de particules céramiques réfractaires à l'intérieur de ladite texture de manière à obtenir une préforme fibreuse (15) chargée de particules céramiques réfractaires (1500),
- premier démoulage de la préforme fibreuse (15),
**caractérisé en ce que** le procédé comprend en outre, après le premier démoulage de la préforme fibreuse (15), les étapes suivantes :
- immersion de la préforme fibreuse (15) démoulée dans un bain d'un liquide apte à décompacter les particules céramiques réfractaires présentes dans la préforme fibreuse,
- mise en forme de la préforme fibreuse humide dans une cavité de moulage présente dans un outillage d'injection,
- élimination du liquide présente dans la préforme fibreuse,
- injection supplémentaire d'une barbotine contenant une poudre de particules céramiques réfractaires dans la préforme fibreuse présente dans la cavité de moulage,
- drainage du liquide de la barbotine ayant traversé la préforme fibreuse et rétention de la poudre de particules céramiques réfractaires à l'intérieur de ladite texture de manière à obtenir une préforme fibreuse chargée de particules céramiques réfractaires,
- deuxième démoulage de la préforme fibreuse.

2. Procédé selon la revendication 1, comprenant, après l'étape de premier démoulage de la préforme fibreuse, une étape de contrôle de la conformité de la préforme fibreuse démoulée comprenant au moins un contrôle de tolérance géométrique, un contrôle de tolérance dimensionnelle ou un contrôle de la qualité de l'injection, la préforme démoulée étant non conforme lorsqu'elle présente une géométrie ou des dimensions hors tolérance ou une ou plusieurs zones dépourvues de particules céramiques,

3. Procédé selon la revendication 1 ou 2, dans lequel l'immersion de la préforme fibreuse (15) démoulée est réalisée dans un bain d'eau maintenu à une température comprise entre 20°C et 80°C.

4. Procédé selon la revendication 3, dans lequel l'immersion de la préforme fibreuse (15) démoulée dans le bain d'eau est réalisée pendant une durée comprise entre 30 minutes et 4 heures.

5. Procédé selon la revendication 3 ou 4, dans lequel l'élimination de l'eau dans la préforme fibreuse est réalisée par chauffage de ladite préforme à une température inférieure à 100°C.

6. Procédé selon l'une quelconque des revendications 1 à 5, dans lequel l'injection supplémentaire de barbotine est réalisée à une pression supérieure ou égale à 6 bars.

7. Procédé selon l'une quelconque des revendications 1 à 6, dans lequel, lors de l'étape de la formation de la texture fibreuse (10), les fils sont tissés suivant un tissage tridimensionnel ou multicouche.

8. Procédé selon l'une quelconque des revendications 1 à 7, dans lequel les fils de la texture fibreuse (10) sont formés de fibres constituées d'un ou plusieurs des matériaux suivants : l'alumine, la mullite, la silice, un aluminosilicate, un borosilicate, du carbure de silicium et du carbone.

9. Procédé selon l'une quelconque des revendications 1 à 8, dans lequel les particules céramiques réfractaires (1500) sont en un matériau choisi parmi : l'alumine, la mullite, la silice, un aluminosilicate, un aluminophosphate, la zircone, un carbure, un borure et un nitrure.

10. Procédé selon l'une quelconque des revendications 1 à 9, comprenant en outre une étape de séchage de la préforme fibreuse réalisée après chaque étape de drainage du liquide (1501) de la barbotine (150) ayant traversé la texture fibreuse (10).

11. Procédé selon l'une quelconque des revendications 1 à 10, dans lequel la pièce en matériau composite obtenue constitue une aube de turbomachine.

12. Procédé de fabrication d'une pièce en matériau composite comprenant la fabrication d'une préforme fibreuse conformément au procédé selon l'une quelconque des revendications 1 à 11 et comprenant en outre, après le deuxième démoulage de la préforme, une étape de frittage des particules céramiques réfractaires présentes dans la préforme fibreuse afin de former une matrice réfractaire densifiée dans ladite préforme.

## Patentansprüche

1. Verfahren zur Herstellung einer faserigen Vorform eines Teils aus Verbundstoff, wobei die Vorform erhalten wird durch:
- Bilden einer faserigen Textur (10) ausgehend von feuerfesten Keramikfasern,
- Formgeben der faserigen Textur (10) in einem Formhohlraum (113), der in einem Spritzwerkzeug (110) vorhanden ist,
- Einspritzen eines Schlickers (150), der ein Pulver aus feuerfesten Keramikpartikeln (1500) enthält, in die in dem Formhohlraum vorhandene faserige Textur (10),
- Abführen der Flüssigkeit (1501) des Schlickers (150), welche die faserige Textur (10) durchquert hat, und Zurückhalten des Pulvers aus feuerfesten Keramikpartikeln im Inneren der Textur, derart dass eine faserige Vorform (15) erhalten wird, die mit feuerfesten Keramikpartikeln (1500) gefüllt ist,
- erstes Entformen der faserigen Vorform (15),
**dadurch gekennzeichnet, dass** das Verfahren ferner nach dem ersten Entformen der faserigen Vorform (15) die folgenden Schritte umfasst:
- Eintauchen der entformten faserigen Vorform (15) in ein Bad aus einer Flüssigkeit, die dazu geeignet ist, die feuerfesten Keramikpartikel, die in der faserigen Vorform vorhanden sind, zu lockern,
- Formgeben der feuchten faserigen Vorform in einem Formhohlraum, der in einem Spritzwerkzeug vorhanden ist,
- Beseitigen der in der faserigen Vorform vorhandenen Flüssigkeit,
- zusätzliches Einspritzen eines Schlickers, der ein Pulver aus feuerfesten Keramikpartikeln enthält, in die faserige Vorform, die in dem Formhohlraum vorhanden ist,
- Abführen der Flüssigkeit des Schlickers, welche die faserige Vorform durchquert hat, und Zurückhalten des Pulvers aus feuerfesten Keramikpartikeln im Inneren der Textur, derart dass eine faserige Vorform erhalten wird, die mit feuerfesten Keramikpartikeln gefüllt ist,
- zweites Entformen der faserigen Vorform.

2. Verfahren nach Anspruch 1, das nach dem Schritt des ersten Entformens der faserigen Vorform einen Schritt des Kontrollierens der Konformität der entformten faserigen Vorform umfasst, die mindestens eine Kontrolle der geometrischen Toleranz, eine Kontrolle der Abmessungstoleranz oder eine Kontrolle der Einspritzqualität umfasst, wobei die entformte Vorform nicht konform ist, wenn sie eine Geometrie oder Abmessungen außerhalb der Toleranz oder eine oder mehrere Zonen ohne Keramikpartikel aufweist.

3. Verfahren nach Anspruch 1 oder 2, wobei das Eintauchen der entformten faserigen Vorform (15) in einem Wasserbad ausgeführt wird, das bei einer Temperatur von zwischen 20 °C und 80 °C gehalten wird.

4. Verfahren nach Anspruch 3, wobei das Eintauchen der entformten faserigen Vorform (15) in das Wasserbad während einer Dauer von zwischen 30 Minuten und 4 Stunden ausgeführt wird.

5. Verfahren nach Anspruch 3 oder 4, wobei das Beseitigen des Wassers in der faserigen Vorform durch Erhitzen der Vorform auf eine Temperatur von unter 100 °C ausgeführt wird.

6. Verfahren nach einem der Ansprüche 1 bis 5, wobei das zusätzliche Einspritzen von Schlicker bei einem Druck von größer oder gleich 6 Bar ausgeführt wird.

7. Verfahren nach einem der Ansprüche 1 bis 6, wobei während des Schritts des Bildens der faserigen Textur (10) die Fäden gemäß einem dreidimensionalen oder mehrschichtigen Weben gewebt werden.

8. Verfahren nach einem der Ansprüche 1 bis 7, wobei die Fäden der faserigen Textur (10) aus Fasern gebildet sind, die aus einem oder mehreren der folgenden Materialien bestehen: Aluminiumoxid, Mullit, Siliziumdioxid, einem Aluminosilikat, einem Borosilikat, Siliziumcarbid und Kohlenstoff.

9. Verfahren nach einem der Ansprüche 1 bis 8, wobei die feuerfesten Keramikpartikel (1500) aus einem Material bestehen, das ausgewählt ist aus: Aluminiumoxid, Mullit, Siliziumdioxid, einem Aluminosilikat, einem Aluminiumphosphat, Zirkonium, einem Carbid, einem Borid und einem Nitrid.

10. Verfahren nach einem der Ansprüche 1 bis 9, das ferner einen Schritt des Trocknens der faserigen Vorform umfasst, der nach jedem Schritt des Abführens der Flüssigkeit (1501) des Schlickers (150), welche die faserige Textur (10) durchquert hat, ausgeführt wird.

11. Verfahren nach einem der Ansprüche 1 bis 10, wobei das erhaltene Teil aus Verbundstoff eine Turbomaschinenschaufel bildet.

12. Verfahren zur Herstellung eines Teils aus Verbundstoff, das die Herstellung einer faserigen Vorform nach dem Verfahren nach einem der Ansprüche 1 bis 11 umfasst und ferner nach dem zweiten Entformen der Vorform einen Schritt des Sinterns der in der faserigen Vorform vorhandenen feuerfesten Keramikpartikel umfasst, um eine verdichtete feuerfeste Matrix in der Vorform zu bilden.

## Claims

1. Manufacturing method for a fibrous preform of a composite material part, the preform being obtained by:
- forming a fibrous texture (10) from refractory ceramic fibres,
- shaping the fibrous texture (10) in a mould cavity (113) present in an injection tool (110),
- injecting a slurry (150) containing a refractory ceramic particle powder (1500) into the fibrous texture (10) present in the mould cavity,
- draining the liquid (1501) from the slurry (150) that passed through the fibrous texture (10) and retaining the refractory ceramic particle powder inside said texture so as to obtain a fibrous preform (15) loaded with refractory ceramic particles (1500),
- first demoulding of the fibrous preform (15),
**characterized in that** the method also comprises, after the first demoulding of the fibrous preform (15), the following steps:
- immersing the demoulded fibrous preform (15) in a bath of a liquid suitable for decompacting the refractory ceramic particles present in the fibrous preform,
- shaping the wet fibrous preform in a mould cavity present in an injection tool,
- eliminating the liquid present in the fibrous preform,
- additionally injecting a slurry containing a refractory ceramic particle powder into the fibrous preform present in the mould cavity,
- draining the liquid from the slurry that passed through the fibrous preform and retaining the refractory ceramic particle powder inside said texture so as to obtain a fibrous preform loaded with refractory ceramic particles,
- second demoulding of the fibrous preform.

2. Method according to claim 1, comprising, after the first step of demoulding the fibrous preform, a step of checking the compliance of the demoulded fibrous preform comprising at least a check of the geometric tolerance, a check of the dimensional tolerance or a check of the injection quality, said demoulded preform being noncompliant when it exhibits an out of tolerance geometry or dimension or one or more areas devoid of ceramic particles.

3. Method according to claim 1 or 2, wherein the demoulded fibrous preform (15) is immersed in a water bath kept at a temperature comprised between 20°C and 80°C.

4. Method according to claim 3, wherein the demoulded fibrous preform (15) is immersed in the water bath for a duration comprised between 30 minutes and 4 hours.

5. Method according to claim 3 or 4, wherein the water in the fibrous preform is eliminated by heating said preform at a temperature less than 100°C.

6. Method according to any one of claims 1 to 5, wherein the additional injection of the slurry is done at a pressure greater than or equal to 6 bars.

7. Method according to any one of claims 1 to 6, wherein, during the step of shaping the fibrous texture (10), the threads are woven according to a three-dimensional or multilayer weave.

8. Method according to any one of claims 1 to 7, wherein the threads of the fibrous texture (10) are formed of fibres made up of one or more of the following materials: alumina, mullite, silica, an aluminosilicate, a borosilicate, silicone carbide and carbon.

9. Method according to any one of claims 1 to 8, wherein the refractory ceramic particles (1500) are of a material chosen from: alumina, mullite, silica, an aluminosilicate, an aluminophosphate, zirconia, a carbide, a boride and a nitride.

10. Method according to any one of claims 1 to 9, also comprising a step of drying the fibrous preform conducted after the step of draining the liquid (1501) from the slurry (150) that passed through the fibrous texture (10).

11. Method according to any one of claims 1 to 10, wherein the composite material part obtained is a turbine engine blade.

12. Method for producing a composite material part comprising the production of a fibrous preform in accordance with the method according to any one of claims 1 to 11 and also comprising, after the second demoulding step of the preform, a sintering step of the refractory ceramic particles present in the fibrous preform in order to form a densified refractory matrix in said preform.
